# EUROPÄISCHE PATENTSCHRIFT

(11) **EP 1 832 157 B1**
(45) Veröffentlichungstag und Bekanntmachung des Hinweises auf die Patenterteilung: **16.12.2009**
(21) Anmeldenummer: 07103032.4
(22) Anmeldetag: 26.02.2007
(51) Int. Cl.: A01F 15/08

(54) **Steuereinrichtung**
Controller
Dispositif de commande

(30) Priorität: 10.03.2006 DE 102006011134
(43) Veröffentlichungstag der Anmeldung: 12.09.2007
(73) Patentinhaber: Deere & Company, Moline, IL 61265-8098 (US)
(72) Erfinder: Viaud, Jean, 70100, Gray (FR)
(74) Vertreter: Magin, Ludwig Bernhard

(56) Entgegenhaltungen:
- EP-A- 1 266 562
- EP-A1- 1 438 889

## Beschreibung

Die Erfindung betrifft eine Steuereinrichtung eines Fahrzeugs, das rundzylinderische Ballen auf den Boden abgibt, mit einem Neigungssensor, der aus der Neigung des Fahrzeugs ein Signal bildet, sowie eine Rundballenpresse oder Ballenwickelvorrichtung.

Die DE 19910 555 A1 offenbart eine Rundballenpresse mit einer als Waage ausgebildeten Ablagevorrichtung für einen Rundballen. Dieser Ablagevorrichtung ist ein Neigungssensor zugeordnet, der aufgrund der Neigung verfälschte Wiegeergebnisse korrigiert.

Aus der EP 1 512 320 A2 geht eine Rundballenpresse hervor, die einen Rundballen auf den Boden ablegt, wobei der Austritt des Rundballens von einer zweiflügeligen Tür gebremst und seine Lage erforderlichenfalls korrigiert wird, so dass er keinen Hang hinunter rollen kann.

Die EP 1 266 563 zeigt und beschreibt eine Rundballenpresse mit angebauter Wickelvorrichtung, wobei zur Überleitung eines aus der Rundballenpresse abgegebenen Rundballens auf einen Wickeltisch zwei hydraulich schwenkbare Träger vorgesehen sind. In einer vollautomatischen Version wird die Neigung eines der Träger und in einer Weiterbildung wird die Neigung und die Ablegegeschwindigkeit des Wickeltischs an die Neigung der Rundballenpresse angepaßt.

Das der Erfindung zugrunde liegende Problem wird darin gesehen, dass die Ablage eines Rundballens am Hang bei Neigungen in verschiedenen Richtungen nach wie vor eine schwierige Angelegenheit ist und die Vermeidung von Problemen nur mit sehr geschulten Bedienungspersonen gelingt oder dass ein auf dem Boden liegender Ballen zurecht gerückt werden muß und dabei beschädigt werden kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird ein Ballen so abgelegt, dass seine Dreh- oder Längsmittenachse der Hangneigung direkt folgt. Anders als im Stand der Technik braucht ein bis zu einer Tonne schwerer Ballen nicht auf dem Boden gedreht zu werden, was mit einer relativ leichten Presse ohnehin nur schwer möglich ist. Da der Ballen nicht gerückt wird, wird auch seine eventuell vorhandene Umhüllung (Netz, Folie) nicht beschädigt. Es kann auch nicht passieren, dass der Ballen einen Hang hinunter in die Rückseite der Presse hinein rollt, bevor seine Lage korrigiert wird. Der Neigungssensor ist so ausgebildet, dass er die Hangneigung sowohl in der Fahrtrichtung als auch quer dazu ermitteln kann; er kann mechanisch, hydraulisch oder elektrisch ausgebildet sein, z.B. als eine Quecksilberwaage. Selbstverständlich können auch mehrere einfache in jeweils nur einer Richtung wirkende Neigungssensoren vorgesehen werden, die gemeinsam ein Signal bilden. Der Neigungssensor kann mit einem Dämpfungsglied versehen sein, das ungewollte Ausschläge aufgrund von Bodenunebenheiten vermeidet. Die Neigung des Fahrzeugs bzw. des Bodens, auf dem es steht, kann auch mittels GPS ermittelt werden, so dass der Neigungssensor mehr in einem Empfänger besteht, der die GPS-Daten empfängt und sie dem Rechner zuführt. Das Signal kann auf vielfältige Weise verwendet werden, angefangen von einer einfachen akustischen Führung bis zu einer vollständig automatischen Steuerung des Fahrzeugs in eine ungefährdete Stellung am Hang. Bei dem Fahrzeug kann es sich um ein selbstfahrendes oder ein gezogenes Fahrzeug handeln, z.B. eine Presse, einen Ballenwickler und dergleichen.

Die Verwendung einer akustischen oder visuellen Anzeigevorrichtung vergleichbar einer Einparkhilfe kann einer Bedienungsperson eine ausreichende Hilfe z.B. zum Ausrichten des Fahrzeugs am Hang geben. Sie kann aber auch ein Warnsignal aussenden, an dem die Bedienungsperson erkennt, dass sie jetzt und solange das Warnsignal anhält, keinen Ballen entladen darf. Verschiedene Alarmstufen können eingestellt werden, die z.B. davon abhängen, ob es in der Umgebung des Ablageorts besondere Risiken, wie etwa eine Straße, gibt. Die Anzeigevorrichtung kann Zeiger, Glühbirnen oder dergleichen oder einen Bildschirm enthalten.

Eine halb- oder vollautomatische Ablage des Ballens in einer ungefährdeten Lage wird ermöglicht, indem das Fahrzeug selbst und/oder die an ihm angebrachte Ablagevorrichtung mittels Betätigungsvorrichtungen verstellt werden können. Die jeweils erforderliche Stellung, z.B. der Knickwinkel zwischen einer Rundballenpresse und einem Ballenwickler oder zwischen einem Zugfahrzeug und der Rundballenpresse kann so verändert werden, dass schließlich der Ballen sicher abgelegt werden kann. Desgleichen kann auch eine Ablagevorrichtung so ausgerichtet werden, dass entweder die Rollachse des Ballens der Hangneigung folgt, oder dass der Ballen mit seiner Stirnfläche auf den Boden abgesetzt wird. Bei dem Rechner kann es sich um einen Bordcomputer auf einem Zugfahrzeug oder auf dem Fahrzeug selbst handeln. Die Betätigungsvorrichtung ist als ein vorzugsweise linear wirkender Elektro- oder Hydraulikmotor ausgebildet.

Eine Ausrichtung des Ballens derart, dass er entweder auf seine Stirnseite aufgesetzt werden kann oder dass seine Rollachse der Hangneigung folgt, kann dadurch erreicht werden, dass an der Ablagevorrichtung ein in verschiedenen Richtungen schwenkbarer Träger vorgesehen ist. Entsprechende Schwenkachsen können durch Gelenkachsen, durch Kugelgelenke, Kardangelenke und dergleichen erzeugt werden. Es können aber auch mehr als zwei Achsen vorgesehen werden, so dass der Träger in jede beliebige Stellung gebracht werden kann. Bei dem Träger kann es sich um eine Mulde, einen Korb, eine Platte, eine Zange und dergleichen handeln, die den Ballen derart trägt, dass er bei seiner Positionierung nicht herunter oder heraus fällt.

Wenn der Träger konkav ausgebildet ist, wird der rund-zylindrische Ballen sicher gelagert. Die Tiefe der Mulde richtet sich nach den zu erwartenden Hangneigungen, der Ballengröße, der Handhabungsgeschwindigkeit, etc..

Während der Ballen zwar grundsätzlich aus einer das Fahrzeug bildenden Presse heraus und unmittelbar auf den Boden fallen könnte, wird ein dadurch entstehender und am Hang nachteiliger Schwung vermieden, indem der Ballen nach dem Verlassen des Fahrzeugs aufgefangen und kontrolliert auf den Boden gesetzt wird. Da diese Bewegung normalerweise als Schwenkbewegung anstatt als eine Parallelogrammbewegung ausgeführt wird, weist eine Achse zwischen einem Horizontalschwenkarm und einem Vertikalschwenkarm in einer angehobenen Stellung des Vertikalschwenkarms eine Neigung zum Boden auf, die im Boden nahen Zustand ungefähr senkrecht zum Boden verläuft. Der Vertikalschwenkarm selbst wird ebenfalls wieder mittels einer Betätigungsvorrichtung um eine Achse vorzugsweise quer zur Fahrtrichtung und normalerweise in der Hangneigungsebene bewegt. Der Horizontalschwenkarm könnte aber auch um eine in der Fahrtrichtung verlaufende Achse gedreht oder geschwenkt werden, so dass der Ballen auf seine Stirnseite abgekippt werden kann.

Stellungssensoren, die jeweils die Relativbewegung oder Relativstellung zwischen den einer Achse zugeordneten Teilen, z.B. dem Träger und dem Horizontalschwenkarm, erkennen und erfassen, können sowohl in Schrittmotoren als auch in Potentiometern, in Reedschaltern, sogenannten aktiven Hydraulikzylindern und dergleichen verwirklicht werden. Es können auch berührungslose Stellungssensoren verwendet werden - ausschlaggebend ist lediglich, dass die Stellung der verstellbaren Komponenten jeweils erkennbar ist und in Beziehung zu der erkannten Neigung gesetzt werden kann. Wenn auch bevorzugt an jeder Achse ein solcher Stellungssensor vorgesehen wäre, so können die entsprechenden Informationen auch mit eventuell nur einem berührungslosen Sensor erlangt werden, der alle in Betracht kommenden Teile erfaßt.

Die Sicherheit beim Entladen eines Ballens wird zusätzlich dadurch erhöht, dass eine zum Entladen des Ballens zu betätigende Auslaßvorrichtung nicht aktivierbar ist, solange von der Steuereinrichtung eine risikobehaftete Situation erkannt wird; neben einem Warnsignal kann eine dazugehörige Betätigungsvorrichtung verriegelt bzw. deaktiviert werden.

Die Steuereinrichtung kann außer für die sichere Ablage des Ballens auch dazu benutzt werden, einen Wert über das Gewicht des Ballens abhängig von der Neigung zu korrigieren.

Rundballenpressen und Ballenwickelvorrichtungen werden vielfach an Hängen und Neigungen eingesetzt; um deren Leistung zu erhöhen, und um sie eventuell gar als Non-Stop-Geräte einsetzen zu können, wird eine zuvor beschriebene Steuereinrichtung eingesetzt.

In der Zeichnung ist ein nachfolgend näher beschriebenes Ausführungsbeispiel der Erfindung dargestellt. Es zeigt:
- Fig. 1: ein Fahrzeug mit einer Steuereinrichtung und einer Ablagevorrichtung in schematischer Darstellung von der Seite,
- Fig. 2: die Ablagevorrichtung aus Figur 1 in einer angehobenen Stellung und in Seitenansicht,
- Fig. 3: die Ablagevorrichtung aus Figur 1 in einer abgesenkten Stellung und in Seitenansicht,
- Fig. 4: die Ablagevorrichtung aus Figur 1 in Draufsicht in einer mittigen Stellung,
- Fig. 5: die Ablagevorrichtung aus Figur 1 in Draufsicht in einer nach rechts gelenkten Stellung, und
- Fig. 6: die Ablagevorrichtung aus Figur 1 in Draufsicht in einer nach links gelenkten Stellung.

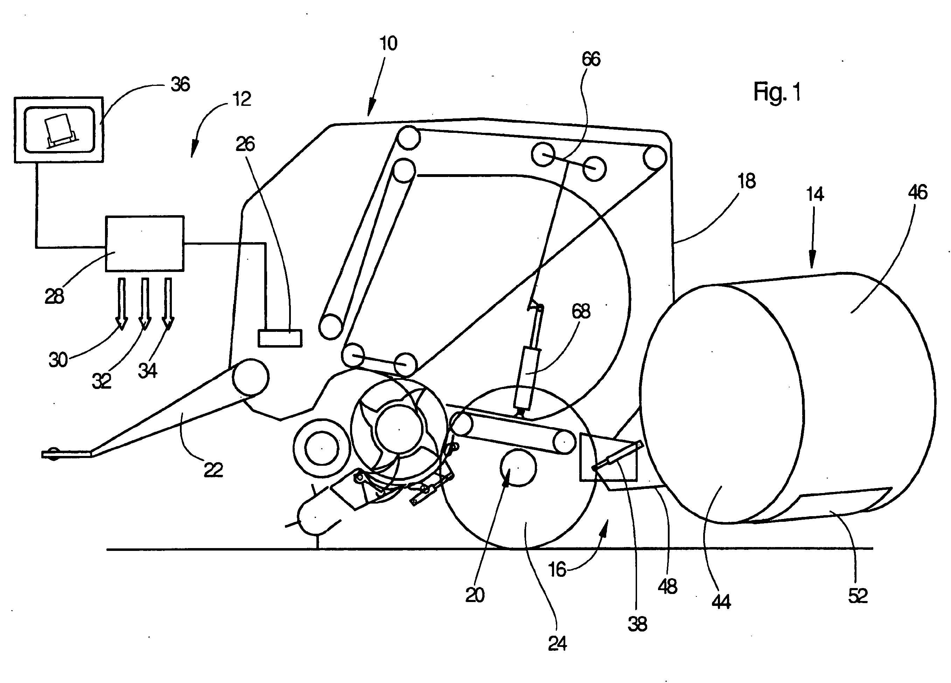

Ein in Figur 1 gezeigtes Fahrzeug 10 ist dort als eine Rundballenpresse dargestellt, die an ein nicht gezeigtes Zugfahrzeug angeschlossen werden kann, das mit einer Steuereinrichtung 12 versehen ist und einen rund-zylindrischen Ballen 14 bildet, der mittels einer Ablagevorrichtung 16 auf den Boden abgelegt werden kann.

Das Fahrzeug 10 weist außer einer Vielzahl für die Erfindung unbedeutender Komponenten einen Rahmen 18, ein Fahrgestell 20, eine Deichsel 22 und eine Auslaßvorrichtung 66 auf.

Der Rahmen 18 ruht auf dem Fahrgestell 20, trägt vorne die Deichsel 22 und hinten die Ablagevorrichtung 16.

Das Fahrgestell 20 stützt sich mit Rädern 24 auf dem Boden ab und folgt einer quer zur Fahrtrichtung verlaufenden Neigung des Bodens und somit mehr oder weniger steil an dem Hang. Die Räder 24 oder das Fahrgestell 20 als Ganzes könnten gegenüber dem Rahmen 18 lenkbar angebracht sein.

Die Deichsel 22 kann um eine vertikale Achse im Anschlußbereich des Zugfahrzeugs schwenken und somit fluchtend oder nicht fluchtend zu dem Zugfahrzeug ausgerichtet werden.

Die Auslaßvorrichtung 66 ist als sogenanntes Gatter, Auslaßklappe oder dergleichen ausgebildet und kann in eine angehobene Stellung gebracht werden, in der ein gebildeter Ballen 14 das Fahrzeug 10 verlassen kann. Hierzu ist eine hydraulisch aktivierbare Betätigungsvorrichtung 68 vorgesehen.

Die Steuereinrichtung 12 enthält unter anderem einen Neigungssensor 26, einen Rechner 28, drei Stellungssensoren 30, 32, 34, eine Anzeigevorrichtung 36 und drei Betätigungsvorrichtungen 38, 40, 42, die untereinander drahtlos oder mit Leitungen verbunden sind. Es ist die Aufgabe der Steuereinrichtung 12, zu erkennen, in welcher räumlichen Beziehung sich das Fahrzeug 10 an einem Hang befindet, und die Ablagevorrichtung 16 so zu steuern, dass der Ballen 14 in einer Weise abgelegt wird, die verhindert, dass er einen Hang hinunter rollt.

Der Neigungssensor 26 kann z.B. als eine Quecksilberwaage ausgebildet sein und erkennt, in welchen Richtungen das Fahrzeug 10 gegenüber einer absoluten Lage geneigt ist. Der Neigungssensor 26 bildet ein Signal, vorzugsweise ein elektronisches, aus dem erkennbar ist, ob das Fahrzeug 10 in der Quer- und/oder der Längsrichtung geneigt ist und zu welchem Grad. Ein nicht gezeigtes Dämpfungsglied wird dafür sorgen, dass Lageänderungen aufgrund von Bodenunebenheiten nicht ins Gewicht fallen. Die Hangneigung könnte auch von anderen Faktoren abgeleitet werden, z.B. von Kräften an der Deichsel 22, von den Seitenkräften auf die Räder 24, insbesondere bei einer Tandemachse, und dergleichen.

Der Rechner 28 ist als ein Bordcomputer auf dem Zugfahrzeug oder als Rechner 28 an dem Fahrzeug 10 selbst ausgebildet und angebracht. CAN-Bus-Technik kann zur Signalübertragung verwendet werden. In dem Rechner 28 wird das Signal des Neigungssensors 26 verarbeitet, d.h. z.B. verstärkt, mit anderen Signalen verknüpft, und daraus ein Ausgangssignal gebildet, z.B. für eine Anzeige auf der Anzeigevorrichtung 36 oder einen akustischen Alarm. Ein anderes Ausgangssignal wird für die Stellungsänderung der Betätigungsvorrichtungen 38 bis 42 gebildet, wozu z.B. nicht gezeigte Elektrohydraulikventile gesteuert werden. Der Rechner 28 kann mit einer Eingabevorrichtung, z.B. einer Tastatur, einem Touchscreen, einer Voice-Control und dergleichen versehen werden, damit eine Bedienungsperson die Signalverarbeitung beenden oder aktivieren und beeinflussen kann. Das von dem Rechner 28 gebildete Signal ist derart ausgebildet, dass die Betätigungsvorrichtungen 38 bis 42 den Ballen 14 in einer Lage ablegen, die verhindert, dass er den Hang hinunter rollt. Der Rechner 28 kann auch an eine Wiegevorrichtung 64 angeschlossen werden, deren Signal korrigiert wird, damit Einflüsse aufgrund der Hangneigung ausgeschlossen werden.

Die Stellungssensoren 30 bis 34 dienen dazu, das Maß der von der jeweils zugehörigen Betätigungsvorrichtung 38 bis 42 erzielten Verstellung zu ermitteln und im Falle einer Regelung an den Rechner 28 zurück zu melden. Die Stellungssensoren 30 bis 34 können gleich oder unterschiedlich ausgebildet sein, z.B. als Potentiometer, als Reed-Schalter etc.; sie wirken in jeweils einer Ebene und erkennen somit die relative Lage des von der jeweiligen Betätigungsvorrichtung 38 bis 42 verstellten Teils. Der Stellungssensor 30 ermittelt die Lage des Ballens 14 über dem Boden und der Stellungssensor 32 die Lage des Ballens 14 gegenüber einer Längsmittenebene des Fahrzeugs 10.

Die Anzeigevorrichtung 36 kann ein einfacher Zeiger sein, ein Echtbild mit einer Anzeige einer kritischen und/oder einer unkritischen Stellung des Fahrzeugs 10 oder der Ablagevorrichtung 16, ein graphisches Display, das Lenkhinweise gibt, etc.; sie befindet sich vorzugsweise auf dem Zugfahrzeug und ist mit dem Rechner 28 verbunden.

Die Betätigungsvorrichtungen 38 bis 42 sind als Hydraulikmotoren oder als Elektromotoren ausgebildet und werden je nach den Anforderungen in einer oder in beiden Richtungen mit Fremdkraft verstellt. Die Betätigungsvorrichtungen 38 bis 42 können auch intern mit Stellungssensoren 30 bis 34, als sogenannte aktive Zylinder, versehen sein.

Der Ballen 14 ist rund-zylindrisch ausgebildet und weist eine Stirnseite 44 und eine Umfangsfläche 46 auf; der Durchmesser kann bis zu 1,8 bis 2 Meter betragen. Der Ballen 14 kann unmittelbar nach dem Verlassen des Fahrzeugs 10 auf den Boden abgelegt oder davor einer Folienwickelvorrichtung aufgegeben werden, wo er zur Silagebildung eingewickelt wird.

Die Ablagevorrichtung 16 dient dazu, den Ballen 14 von dem Fahrzeug 10 anzunehmen und ihn auf den Boden abzulegen, wobei die Ablage von den Betätigungsvorrichtungen 38 bis 42 so gesteuert wird, dass ein Wegrollen nicht stattfindet. Die Ablagevorrichtung 16 kann direkt an das Fahrzeug 10 angebaut oder Teil eines Gespanns sein, das hinter dem Fahrzeug 10 hergezogen werden kann und diesem gegenüber auslenkbar ist. Die Ablagevorrichtung 16 enthält unter anderem einen Vertikalschwenkarm 48, einen Horizontalschwenkarm 50 und einen Träger 52. Der Vertikalschwenkarm 48 ist um eine Achse 54 an dem Rahmen 18, der Horizontalschwenkarm 50 um eine Achse 56 an dem Vertikalschwenkarm 48 und der Träger 52 um eine Achse 58 an dem Horizontalschwenkarm 50 angelenkt.

Der Vertikalschwenkarm 48 erstreckt sich im Wesentlichen über die Breite des Fahrzeugs 10, ist zum Teil U-förmig ausgebildet und an beiden Seiten des Fahrzeugs 10 vertikal schwenkbar angeschlossen. Er befindet sich derart unterhalb einer Ausgabeöffnung des Fahrzeugs 10, dass der Träger 52 den Ballen 14 aufnehmen kann. In einem vorderen Bereich sind ein oder mehrere Hebelarme 60 vorgesehen, an die ein oder mehrere Betätigungsvorrichtungen 38 angreifen, die sich anderenends an dem Rahmen 18 abstützen. Im rückwärtigen Bereich ist der Vertikalschwenkarm 48 mit einem Kragarm 62 versehen, in dessen freiem Endbereich sich die Achse 56 befindet. Der Kragarm 62 verläuft im Längsmittenbereich des Fahrzeugs 10. Die Achse 54 verläuft normalerweise horizontal und quer zur Längsmittenebene des Fahrzeugs 10. Sie wird in der Form von Zapfen, einer Welle oder dergleichen verwirklicht. Im Bereich der Achse 54 befindet sich der Stellungssensor 30, der die relative Lage zwischen dem Vertikalschwenkarm 48 und dem Rahmen 18 und somit seine Stellung in Bezug auf den Boden ermitteln kann; er kann sowohl an dem Rahmen 18 als auch an dem Vertikalschwenkarm 48 angebracht sein.

Der Horizontalschwenkarm 50 ist in seinem vorderen Bereich mit der Achse 56 und in seinem rückwärtigen Bereich mit der Achse 58 versehen, die zueinander unter einem Winkel von neunzig Grad verlaufen und ebenfalls wieder in der Form von Wellen, Zapfen etc. verwirklicht werden. Der Horizontalschwenkarm 50 kann gegenüber der Längsmittenebene des Fahrzeugs 10 um neunzig Grad zu jeder Seite geschwenkt werden, was mittels der Betätigungsvorrichtung 40 direkt oder mittels einer Zahnstangen-Zahnrad-Verbindung erreichbar ist. Der Horizontalschwenkarm 50 ist wesentlich kürzer ausgebildet als der Vertikalschwenkarm 48 und dient im Wesentlichen der gelenkigen Verbindung des Trägers 52 mit dem Vertikalschwenkarm 48. Die Achse 56 ist so ausgerichtet, dass sie im abgesenkten Zustand des Vertikalschwenkarms 48 im Wesentlichen senkrecht zu dem Boden verläuft, d.h., dass sie im angehobenen Zustand des Vertikalschwenkarms 48 eine Neigung zur Vertikalen einnimmt. Der Stellungssensor 32 befindet sich in der Nähe der Achse 56 und erkennt die Relativstellung zwischen dem Vertikalschwenkarm 48 und dem Horizontalschwenkarm 50.

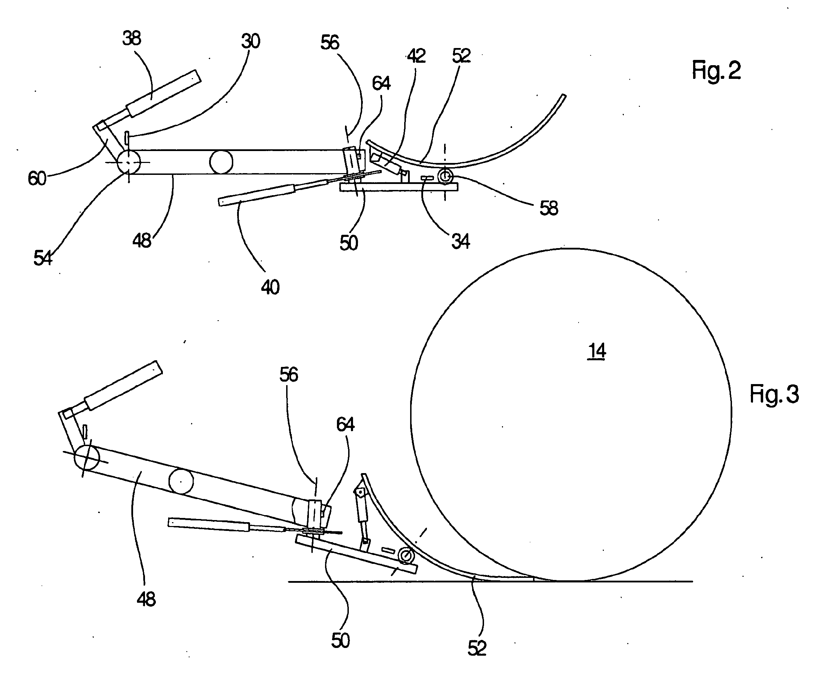

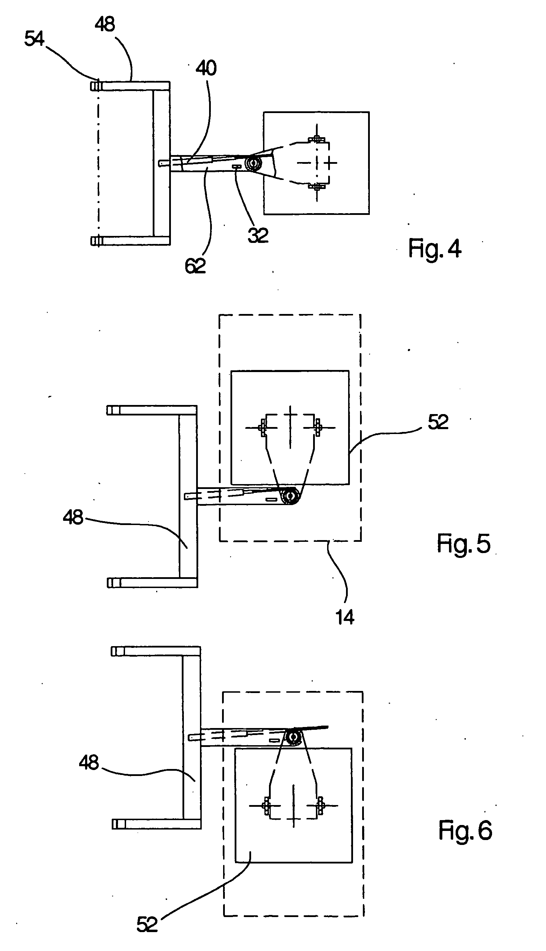

Der Träger 52 ist muldenförmig ausgebildet und so geformt, dass der einen Ballen 14 mit seiner Umfangsfläche 46 lagesicher aufnehmen und während der Bewegung zum Boden halten kann. Der Träger 52 kann um die Achse 58 in vertikaler Richtung schwenken, wobei die Achse 58 wie die anderen Achsen 54, 56 ausgebildet sein kann. In einer neutralen Stellung, wie sie in den Figuren 2 und 4 gezeigt ist, verläuft die Achse 58 horizontal und quer zur Fahrtrichtung des Fahrzeugs 10. Der Stellungssensor 34 ist in der Nähe der Achse 58 vorgesehen und erkennt somit die Stellung des Trägers 52 gegenüber dem Horizontalschwenkarm 50. Die Betätigungsvorrichtung 42 wirkt zwischen dem Träger 52 und dem Horizontalschwenkarm 50 und wird wie die anderen Betätigungsvorrichtungen 38 bis 42 von dem Rechner 28 aus gesteuert, entweder elektrisch oder elektrohydraulisch. Der Stellungssensor 34 zusammen mit dem Neigungssensor 26, dem Rechner 28 und der Betätigungsvorrichtung 42 sind in der Lage, den Träger 52 stets in einer horizontalen Lage zu halten, d.h. auch dann, wenn das Fahrzeug 10 einen Hang hinab oder hinauf fährt; es kann folglich nicht geschehen, dass der Ballen 14 von dem Träger 52 herunter rollt. Wie dies in Figur 2 ersichtlich ist, ist der Träger 52 nach hinten verlängert, damit er einerseits eine sanfte Abgabe des Ballens 14 auf den Boden erreicht und andererseits bei der Fahrt hangaufwärts, der Ballen 14 nicht von dem Träger 52 herunter rollen kann.

Selbstverständlich sind in der Steuereinrichtung 12 Leitungen, Stromquellen etc. vorgesehen, die aber weder gezeichnet noch beschrieben sind, weil sie sich von selbst ergeben.

Nach alledem ergibt sich folgende Funktion.

Während des Betriebs erstellt der Neigungssensor 26 ein Signal, das er an den Rechner 28 weiterleitet und aus dem dieser erkennt, in welcher Lage sich das Fahrzeug 10 gegenüber einer auf den Erdmittelpunkt gerichteten Linie befindet. Beispielsweise ist das Fahrzeug 10 zur Seite geneigt, wenn eine durch die Räder 24 des Fahrgestells 20 verlaufende Drehachse einer Hangneigung folgt oder nach vorne bzw. hinten gekippt, wenn das Fahrzeug 10 einen Hang hinauf oder hinab gefahren wird. Selbstverständlich kann das Fahrzeug 10 auch in beiden Richtungen geneigt sein. Bei jeder Neigung besteht die Gefahr, dass ein sich auf dem Träger 52 befindlicher Ballen 14 von diesem herunter rollt, oder nach seiner Ablage auf dem Boden den Hang hinunter rollt.

Der Rechner 28 erstellt ein Signal, das:
a) eine Anzeige auf der Anzeigevorrichtung 36 erstellt;
b) auf die Betätigungsvorrichtung 68 und/oder
c) auf eine oder mehrere der Betätigungsvorrichtungen 38 bis 42 wirkt.

Im Falle der Anzeige auf der Anzeigevorrichtung 36 wird entweder nur eine Warnanzeige gegeben oder eine Positionierung des Fahrzeugs 10 gefordert, die außerhalb des kritischen Ablagebereichs für den Ballen 14 liegt.

Wenn der Rechner 28 nur eine Entladung des Ballens 14 aus dem Fahrzeug 10 verhindern soll, wird eine Aktivierung der Betätigungsvorrichtung 68 unterbunden.

In dem Falle, dass eine halb- oder vollautomatische Steuerung oder Regelung einer oder mehrerer der Betätigungsvorrichtungen 38 bis 42 derart erfolgen soll, dass der Ballen 14 sicher von dem Fahrzeug 10 angenommen und auf den Boden abgesenkt wird und so zu liegen kommt, dass er nicht wegrollt, geschieht folgendes:
Die Betätigungsvorrichtungen 38 bis 42, insbesondere die Betätigungsvorrichtung 40 wird so aktiviert, dass eine Längsmittenachse des Ballens 14 parallel zu der Hangneigung zu liegen kommt. Auf diese Weise ergibt sich kein hangabwärts gerichtetes Rollmoment. Je nachdem, wo sich das Fahrzeug 10 auf dem Hang befindet, kann ein Schwenkbogen des Horizontalschwenkarms 50 von neunzig Grad in einer Richtung nicht ausreichen, um den Ballen 14 sicher abzulegen; in diesem Fall muß der Horizontalschwenkarm 50 in die andere Richtung geschwenkt werden.

## Patentansprüche

1. Steuereinrichtung (12) eines Fahrzeugs (10), das rund-zylindrische Ballen (14) auf den Boden abgibt, mit einem Neigungssensor (26), der aus der Neigung des Fahrzeugs (10) ein Signal bildet, das zum Positionieren einer an ihm angebrachten Ablagevonichtung (16) für den Ballen (14) verwendbar ist, **dadurch gekennzeichnet, daß** der oder mehrere Neigungssensoren (26) eine in und quer zur Fahrtrichtung verlaufende Neigung erfasst/en und eine Positionierung der Ablagevorrichtung (16) oder des Fahrzeugs (10) hervorruft hervorrufen, in der der Ballen (14) ohne die Gefahr zu rollen, abgelegt werden kann.

2. Steuereinrichtung nach Anspruch 1, **dadurch gekennzeichnet, dass** sie eine akustische oder visuelle Anzeigevorrichtung (36) enthält, auf der auf eine für die Ablage des Ballens (14) gefährliche Hangsituation dargestellt wird.

3. Steuereinrichtung nach Anspruch 1 oder 2, **gekennzeichnet durch** wenigstens eine Betätigungsvorrichtung (38, 40, 42) und einen Rechner (28), wobei der Rechner (28) aus dem Signal ein Stellsignal für die Betätigungsvorrichtung (38, 40, 42) bildet, das geeignet ist, das Fahrzeug (10) und/oder die Ablagevorrichtung (16) in eine Stellung zu bringen, in der eine ungefährdete Ablage des Ballens (14) möglich ist.

4. Steuereinrichtung nach einem oder mehreren der vorherigen Ansprüche, **dadurch gekennzeichnet, dass** die Ablagevorrichtung (16) einen Träger (52) aufweist, der um wenigstens zwei Achsen (56, 58) schwenkbar ist, wobei pro Achse (56, 58) vorzugsweise eine Betätigungsvorrichtung (40,42) vorgesehen ist.

5. Steuereinrichtung nach Anspruch 4, **dadurch gekennzeichnet, dass** der Träger (52) konkav ausgebildet ist.

6. Steuereinrichtung nach einem der Ansprüche 4 oder 5, **dadurch gekennzeichnet, dass** der Träger (52) direkt oder indirekt an einem Vertikalschwenkarm (48) angebracht ist, der um eine dritte Achse (54) mittels einer Betätigungsvorrichtung (38) schwenkbar ist, wobei eine Achse (56) zwischen dem Horizontalschwenkarm (50) und dem Vertikalschwenkarm (48) in einer angehobenen Stellung des Vertikalschwenkarms (48) eine Neigung zum Boden aufweist.

7. Steuereinrichtung nach Anspruch 6, **dadurch gekennzeichnet, dass** jeder Achse (54, 56, 58) vorzugsweise ein Stellungssensor (30, 32, 34) zugeordnet ist.

8. Steuereinrichtung nach einem oder mehreren der vorherigen Ansprüche 3 bis 7, **dadurch gekennzeichnet, dass** der Rechner (28) ein Signal an eine Betätigungsvorrichtung (68) zur Bewegung einer Auslaßvorrichtung (66) liefert.

9. Steuereinrichtung nach einem oder mehreren der vorherigen Ansprüche 3 bis 8, **dadurch gekennzeichnet, dass** der Rechner (28) abhängig von der Neigung ein Korrektursignal für eine Wiegevorrichtung (64) liefert.

10. Rundballenpresse oder Ballenwickelvorrichtung mit einer Steuereinrichtung (12) nach einem oder mehreren der vorherigen Ansprüche.

## Claims

1. Controller (12) of a vehicle (10) which outputs round-cylindrical bales (14) onto the ground, having an inclination sensor (26) which forms, from the inclination of the vehicle (10), a signal which can be used to position a depositing device (16), attached to said vehicle (10), for the bale (14), **characterized in that** the inclination sensor (26) or a plurality of inclination sensors (26) senses/sense an inclination extending in the direction of travel and an inclination extending transversally with respect to the direction of travel, and causes/cause the depositing device (16) or the vehicle (10) to be positioned in such a way that the bale (14) can be deposited without the risk of rolling.

2. Controller according to Claim 1, **characterized in that** said controller contains an acoustic or visual display device (36) on which an incline situation which is hazardous for the depositing of the bale (14) is displayed.

3. Controller according to Claim 1 or 2, **characterized by** at least one activation device (38, 40, 42) and a computer (28), wherein the computer (28) forms, from the signal, an actuation signal for the activation device (38, 40, 42) which is suitable for moving the vehicle (10) and/or the depositing device (16) into a position in which risk-free depositing of the bale (14) is possible.

4. Controller according to one or more of the preceding claims, **characterized in that** the depositing device (16) has a mount (52) which can be pivoted about at least two axes (56, 58), wherein preferably one activation device (40, 42) is provided per axis (56, 58).

5. Controller according to Claim 4, **characterized in that** the mount (52) is of concave design.

6. Controller according to either of Claims 4 or 5, **characterized in that** the mount (52) is attached directly or indirectly to a vertical pivoting arm (48) which can be pivoted about a third axis (54) by means of an activation device (38), wherein one axis (56) between the horizontal pivoting arm (50) and the vertical pivoting arm (48) has an incline with respect to the ground in a raised position of the vertical pivoting arm (48).

7. Controller according to Claim 6, **characterized in that** each axis (54, 56, 58) is preferably assigned a position sensor (30, 32, 34).

8. Controller according to one or more of the preceding Claims 3 to 7, **characterized in that** the computer (28) supplies a signal to an activation device (68) for moving a discharge device (66).

9. Controller according to one or more of the preceding Claims 3 to 8, **characterized in that** the computer (28) supplies a correction signal for a weighing device (64) as a function of the inclination.

10. Round bale press or bale-winding device having a controller (12) according to one or more of the preceding claims.

## Revendications

1. Dispositif de commande (12) d'un véhicule (10) qui dépose des balles rondes cylindriques (14) sur le sol, comprenant un capteur d'inclinaison (26) qui génère à partir de l'inclinaison du véhicule (10) un signal utilisable pour le positionnement d'un dispositif de dépose (16) de la balle (14) monté sur lui, **caractérisé en ce qu'**un ou plusieurs capteurs d'inclinaison (26) détectent une inclinaison dans le sens du déplacement et transversale par rapport à celui-ci et provoquent un positionnement du dispositif de dépose (16) ou du véhicule (10) dans lequel la balle (14) peut être déposée sans risque de rouler.

2. Dispositif de commande selon la revendication 1, **caractérisé en ce qu'**il contient un dispositif indicateur (36) sonore ou visuel sur lequel est indiquée une situation de pente dangereuse pour la dépose de la balle (14).

3. Dispositif de commande selon la revendication 1 ou 2, **caractérisé par** au moins un dispositif d'actionnement (38, 40, 42) et un ordinateur (28), l'ordinateur (28) générant à partir du signal un signal de commande pour le dispositif d'actionnement (38, 40, 42) qui est conçu pour amener le véhicule (10) et/ou le dispositif de dépose (16) dans une position dans laquelle il est possible de déposer la balle (14) sans danger.

4. Dispositif de commande selon une ou plusieurs des revendications précédentes, **caractérisé en ce que** le dispositif de dépose (16) présente un support (52) qui peut pivoter autour d'au moins deux axes (56, 58), un dispositif d'actionnement (40, 42) étant de préférence prévu pour chaque axe (56, 58).

5. Dispositif de commande selon la revendication 4, **caractérisé en ce que** le support (52) est de forme concave.

6. Dispositif de commande selon la revendication 4 ou 5, **caractérisé en ce que** le support (52) est monté directement ou indirectement sur un bras pivotant vertical (48) qui peut pivoter autour d'un troisième axe (54) au moyen d'un dispositif d'actionnement (38), un axe (56) entre le bras pivotant horizontal (50) et le bras pivotant vertical (48) présentant une inclinaison par rapport au sol dans une position relevée du bras pivotant vertical (48).

7. Dispositif de commande selon la revendication 6, **caractérisé en ce qu'**un capteur de position (30, 32, 34) est de préférence associé à chaque axe (54, 56, 58).

8. Dispositif de commande selon une ou plusieurs des revendications précédentes 3 à 7, **caractérisé en ce que** l'ordinateur (28) délivre un signal à un dispositif d'actionnement (68) pour déplacer un dispositif de sortie (66).

9. Dispositif de commande selon une ou plusieurs des revendications précédentes 3 à 8, **caractérisé en ce que** l'ordinateur (28) délivre un signal de correction pour un dispositif de pesée (64) en fonction de l'inclinaison.

10. Presse à balles rondes ou dispositif d'emballage de balles comprenant un dispositif de commande (12) selon l'une ou plusieurs des revendications précédentes.
